# EUROPEAN PATENT APPLICATION

(11) **EP 4 749 160 A1**
(43) Date of publication of application: **27.05.2026**
(21) Application number: 24214990.4
(22) Date of filing: 24.11.2024
(51) Int. Cl.: F16H 7/08, F16H 7/18, F16H 7/24, F16H 57/05

(54) **METHOD FOR REPLACING A TIMING BELT WITH A TIMING CHAIN**

(71) Applicant: Heerschap, Ischa Matthias, 1792CW Oudeschild (NL)
(72) Inventor: Heerschap, Ischa Matthias, 1792CW Oudeschild (NL)
(74) Representative: Laddé, Jurre Gerard

(57) **Abstract**

A method is disclosed for replacing, in an engine block, a timing belt, preferably a wet timing belt, with a timing chain. The method comprises removing the timing belt from the engine block, and replacing a plurality of timing belt pulleys with a plurality of timing chain sprockets. The method also comprises mounting the timing chain around the plurality of timing chain sprockets, and mounting a chain tensioner guide in the engine block. The method also comprises mounting a hydraulic tensioning device in the engine block. The mounted hydraulic tensioning device is configured to apply a force on the mounted chain tensioner guide for tensioning the mounted timing chain. The method further comprises replacing a timing belt cover with a timing chain cover. The timing chain cover comprises an oil inlet for allowing oil to pass through the timing chain cover and reach the hydraulic tensioning device for actuating the hydraulic tensioning device. The method also comprises fluidly connecting the oil inlet to a source of pressurized oil.

## Description

### FIELD OF THE INVENTION

This disclosure relates to a method for replacing, in an engine block, a timing belt, preferably a wet timing belt, with a timing chain. This method further relates to a timing chain cover, a system comprising a support element and a chain tensioner guide, and a kit of part for such method.

### BACKGROUND

In an engine block, one or more camshafts are typically driven by an endless timing chain or belt, which in turn is driven by the crankshaft. The timing chain or belt ensures that the crankshaft and the one or more camshafts are driven in synchronism so that the engine functions properly.

Nowadays, many engine blocks have a timing belt, which is often made of rubber, whereas a timing chain would often consist of steel shackles. A timing belt may be referred to as a wet timing belt if it operates within the engine so that it is lubricated by the engine oil.

Although timing belts held the promise of being quite durable, it has become clear in recent years that they are not. Rubber timing belts were expected to last 10 years or 180.000 km, however, in practice they often have to be replaced already after 4 years or around 70.000 km.

Timing chains are much more durable than timing belts. In principle, a timing chain does not have to be replaced during the lifetime of the engine. In light of the above, there is a need in the art for technology that enables to easily replace a timing belt with a timing chain.

### SUMMARY

To that end, a method is disclosed for replacing, in an engine block, a timing belt, preferably a wet timing belt, with a timing chain. The method comprises removing the timing belt from the engine block, and replacing a plurality of timing belt pulleys with a plurality of timing chain sprockets. The method also comprises mounting the timing chain around the plurality of timing chain sprockets, and mounting a chain tensioner guide in the engine block. The method also comprises mounting a hydraulic tensioning device in the engine block. The mounted hydraulic tensioning device is configured to apply a force on the mounted chain tensioner guide for tensioning the mounted timing chain. The method further comprises replacing a timing belt cover with a timing chain cover. The timing chain cover comprises an oil inlet for allowing oil to pass through the timing chain cover and reach the hydraulic tensioning device for actuating the hydraulic tensioning device. The method also comprises fluidly connecting the oil inlet to a source of pressurized oil.

This method allows for easily replacing a timing belt, typically a rubber timing belt, with a timing chain, that would typically consist of steel shackles. Such replacement will greatly enhance the durability of the engine block. A timing chain typically must be brought under greater tension than a timing belt for proper operation. Where a timing belt can typically be tensioned using a mechanical spring only, a timing chain typically requires a hydraulic tensioning device that operates at least partially based on pressurized engine oil. Hence, it is quite challenging to replace a timing belt with a timing chain, because there is typically no supply of pressurized oil in the engine near the position where the hydraulic tensioning device is going to be mounted. The method disclosed herein alleviates this problem in that the timing chain cover comprises an oil inlet so that pressurized oil for actuation of the tensioning device can be provided to it from outside of the engine block. This obviates the need to have a source of pressurized oil in the engine block near the hydraulic tensioning device, and therefore for example obviates the need to drill additional oil channels in the engine block.

As a side note, the method disclosed herein has been found to be especially suitable for replacing a timing belt with a timing chain specifically in a PureTech engine block, such as a 1.0 or 1.2 PureTech engine block.

Preferably each timing belt pully out of the plurality of timing belt pulleys is replaced by a single timing chain sprocket out of the plurality of timing chain sprockets. Replacing the plurality of timing belt pulleys with the plurality of timing chain sprockets may comprise detaching at least one timing belt pulley from the crankshaft and detaching one or more timing belt pulleys, e.g. two timing belt pulleys, from respective one or more camshafts, and then attaching at least one timing chain sprocket to the crankshaft and attaching one or more timing chain sprockets to respective one or more camshafts. The timing chain sprockets referred to in this disclosure are preferably steel sprockets.

Herein, preferably, the timing chain sprockets are attached to the one or more camshafts and the crankshaft using the original hubs that also attached the timing belt pulleys to the one or more camshafts and the crankshaft. Hence, preferably, replacing a timing belt pulley with a timing chain sprocket, wherein the timing belt pully is attached to a shaft by means of a hub, comprises detaching the timing belt pulley from the hub and then attaching the timing chain sprocket to the hub. Then, the hub with the timing chain sprocket attached to it may be attached again to the shaft in question. For attaching a timing chain sprocket referred to herein to a crankshaft, a crank hub known in the art may be used. For attaching a timing chain sprocket referred to herein to a camshaft, a camshaft hub known in the art may be used, for example a camshaft adjuster hub known in the art.

Preferably, while performing the method of replacing the timing belt with a timing chain, one of more camshafts have a fixed position and orientation relative to the crankshaft to ensure that after the replacement the crankshaft and the one or more camshafts operate again in the correct rhythm with respect to each other.

The chain tensioner guide, and any chain guide referred to herein may comprise, e.g. essentially consist of, nylon. Nylon guides are quite durable and smooth so that the timing chain can slide through the chain tensioner guide without too much friction. A chain guide referred to herein for example comprises a shoe-element in sliding engagement with the timing chain when the engine is in operation. Preferably, the chain tensioner guide is movable relative to the engine block so that it can be pushed against the timing chain as the timing chain moves past the chain tensioner guide, e.g. as the timing chain slides through the shoe-element. Of course, in addition to the chain tensioner guide, one or more further chain guides may be mounted during the replacement.

The hydraulic tensioning device may comprise a housing and a plunger that is movable relative to the housing. The plunger may be actuated, for example may be caused to extend from the housing, by oil pressing against the plunger in the housing. The plunger may then press against the chain tensioner guide when the plunger extends from the housing. The hydraulic tensioning device may also comprise an auxiliary mechanical spring so that that hydraulic tensioning device also applies a force on the mounted chain tensioner guide if the oil pressure is too low for actuating the device.

The oil inlet of the timing chain cover may be embodied as a through-hole in the cover. The timing chain cover may be fabricated by drilling a through-hole in the timing belt cover, for example. Irrespective of this, fluidly connecting the oil inlet to a source of pressurized oil may comprise using a banjo fitting and bolt system to fluidly connect an oil tube system to the oil inlet and fluidly connecting the oil tube system to the source of pressurized oil.

The overall dimensions of the timing chain cover are preferably the same as the dimensions of the timing belt cover so that the timing chain cover ban be properly mounted on the engine block. Both the timing belt cover and the timing chain cover typically have clearance holes through which bolts can extend into inner threads in the engine block so that the timing belt cover and timing chain cover can be bolted to the engine block. Of course, the positions of the clearance holes in the timing chain cover preferably match the positions of the clearance holes in the timing belt cover, so that the clearance holes of the timing chain cover nicely align with inner threads in the engine block.

As referred to herein, pressurized oil may be understood to refer to oil that is under sufficient pressure to actuate the chain tensioning device such that the chain tensioning device can tension the timing chain. An engine block typically comprises an oil pump that pumps engine oil through oil channels in the engine block and hence pressurizes the oil in these oil channels.

The mounted timing chain cover may form an oil-tight seal when it is mounted on the engine block so that oil from the engine block does not leak out.

In an embodiment, the timing chain cover is provided with the hydraulic tensioning device. Then, the step of mounting the hydraulic tensioning device in the engine block may be performed by mounting the timing chain cover on the engine block.

This embodiment is advantageous in that it allows to mount the hydraulic tensioning device at the correct position by simply mounting the timing chain cover. As referred to herein, a first element being provided with a second element may embodied by the second element being attached to, e.g. mounted on, the second element and/or by the first and second element forming a unit. Thus, the timing chain cover being provided with the hydraulic tensioning device may be embodied by the hydraulic tensioning device being attached to the timing chain cover and/or by the hydraulic tensioning device and the timing chain device forming a unit.

In an embodiment, fluidly connecting the oil inlet to the source of pressurized oil comprises fluidly connecting the oil inlet to an oil outlet of the engine block. In this embodiment, the oil outlet is used as the source of pressurized oil. This is advantageous as it obviates the need to provide a separate source of pressurized oil, for example obviates the need to mount an additional pump system inside of or outside of the engine block.

In an embodiment, the method comprises
- disconnecting a device from the oil outlet, and
- fluidly connecting a manifold system to the oil outlet, and
- fluidly connecting the device to a first outlet of the manifold system, and
- fluidly connecting the oil inlet of the timing chain cover to a second outlet of the manifold device.

This embodiment is advantageous as it allows the original device to keep functioning as before because it will still receive pressurized oil from the oil outlet, yet that pressurized oil can be provided, through the timing chain cover, to the hydraulic tensioning device as well.

In an embodiment, the oil outlet of the engine block is an oil outlet for providing oil to an oil pressure sensor. A typical engine block comprises such an oil outlet. A PureTech engine, such as the 1.0 or 1.2 PureTech engine, indeed comprises such an oil outlet for a pressure sensor. First the oil pressure sensor may be disconnected from the oil outlet and thereafter may the oil inlet of the timing chain cover be fluidly connected to the oil outlet. The oil outlet is for example fluidly connected to an oil channel in the engine block through which an oil pump pumps the engine oil.

In an embodiment, fluidly connecting the oil inlet of the timing chain cover to the oil outlet of the engine block comprises
- disconnecting the oil pressure sensor from the oil outlet, and
- fluidly connecting a manifold system to the oil outlet, and
- fluidly connecting the oil pressure sensor to a first outlet of the manifold system, and
- fluidly connecting the oil inlet of the timing chain cover to a second outlet of the manifold device.

In an embodiment, the manifold system comprises a banjo fitting. The manifold system may comprise a banjo fitting-and-bolt configuration.

In an embodiment, the chain tensioner guide is movably, preferably pivotably, mountable on a support element, which is preferably a plate-like element. In such case, the step of mounting the chain tensioner guide in the engine block comprises mounting the support element in the engine block.

This embodiment is advantageous in that it enables to easily mount the chain tensioner guide in the correct position. The support element may namely be adapted to be easily mounted in the engine block using existing threaded holes in the engine block. For example, guide rollers for the timing belt were bolted to these threaded holes when the engine block still contained the timing belt. On the other hand, the position of the chain tensioner guide, in particular the position of its pivot point, can be freely selected anywhere on the support element independent from the positions where the support element is attached to the engine block. Thus, the chain tensioner guide can be easily positioned such that it properly guides the timing chain and tensions the timing chain. Hence, this embodiment enables to easily mount the chain tensioner guide in the correct position.

The support element on which the chain tensioner guide is movably mounted may be brought into the engine block via an opening at a top side of the engine block.

In an embodiment, the method comprises mounting a further chain guide in the engine block. The further chain guide is mountable on the support element. Mounting the further chain guide in the engine block comprises mounting the support element in the engine block.

This embodiment enables to mount both the chain tensioner guide and the further chain guide in the correct position by simply mounting the support element in the engine block. The further chain guide may have a fixed position relative to the support element when it is mounted on the support element.

One aspect of this disclosure relates to a timing chain cover for covering a timing chain comprising chamber of an engine block, the timing chain cover comprising an oil inlet for allowing oil to pass through the timing chain cover and reach a hydraulic tensioning device in the chamber for actuating the hydraulic tensioning device that is configured to apply a force on a chain tensioner guide for tensioning the timing chain.

As explained above, such timing chain cover allows to easily replace a timing belt with a timing chain, because it obviates the need to have an oil channel in the engine block near the chain tensioning device.

In an embodiment of this aspect, the timing chain cover is provided with the hydraulic tensioning device. The hydraulic tensioning device may have been mounted on the timing chain cover, for example by means of bolts and/or snap-fit connections.

One aspect of this disclosure relates to a system comprising any of the chain tensioner guides referred to herein and any of the support elements referred to herein, wherein the chain tensioner guide is movably, preferably pivotably, mounted on the support element.

In an embodiment of this system, the system comprises any of the further chain guides referred to herein, wherein the further chain guide is mounted on the support element.

One aspect of this disclosure relates to an engine block comprising any of the timing chain covers disclosed herein and/or any of the systems referred to in the two preceding paragraphs.

One aspect of this disclosure relates to a kit of parts comprising any of the timing chain covers referred to herein and any of the hydraulic tensioning devices referred to herein.

In this aspect, the kit of parts may also comprise any of the timing chain sprockets referred to herein.

In an embodiment of this aspect, the kit of parts also comprises any of the support elements referred to herein and any of the chain tensioner guides referred to herein.

In an embodiment of this aspect, the kit of parts comprises any of the further chain guides referred to herein.

One aspect of this disclosure relates to a further kit of parts that comprises any of the support elements referred to herein and any of the chain tensioner guides referred to herein. Thus, this further kit does not necessarily comprise a timing chain cover and does not necessarily comprise a hydraulic tensioning device.

A further aspect of this disclosure relates to any of the support elements referred to herein having movably mounted thereon, preferably pivotably mounted thereon, any of the chain tensioner guides referred to herein.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

### BRIEF DESCRIPTION OF THE DRAWINGS

Aspects of the invention will be explained in greater detail by reference to exemplary embodiments shown in the drawings, in which:
FIG. 1A schematically shows an engine block comprising a timing chain cover according to an embodiment;
FIG. 1B shows the same as figure 1A only with the engine block transparent;
FIG. 2A is a perspective view of the system as depicted in figure 1A only with the engine block omitted;
FIG. 2B is the same as figure 2A only with the timing chain cover omitted;
FIG. 2C is a back side view of the configuration shown in figure 2A;
FIG. 2D is the same as figure 2C only with the support element omitted;
FIG. 3 shows different views on a timing chain cover according to an embodiment;
FIG. 4 shows different views on a timing chain sprocket according to an embodiment, in particular a timing chain sprocket that mechanically connects to a camshaft;
FIG. 5 shows different views on a timing chain sprocket according to an embodiment, in particular a timing chain sprocket that mechanically connects to a crankshaft;
FIG. 6A shows a support element, chain tensioner guide and further chain guide according to an embodiment;
FIG. 6B illustrates how the support element, chain tensioner guide and further chain guide may be mounted in the engine block;
FIG. 7A shows a manifold system that may be used in an embodiment;
FIG. 7B is an exploded view on the manifold system shown in figure 7A;
FIG. 8A is an exploded front view of the system shown in figure 1A;
FIG. 8B is an exploded rear view of the system shown in figure 1A.

### DETAILED DESCRIPTION OF THE DRAWINGS

In the figures, identical reference numbers indicate identical or similar elements.

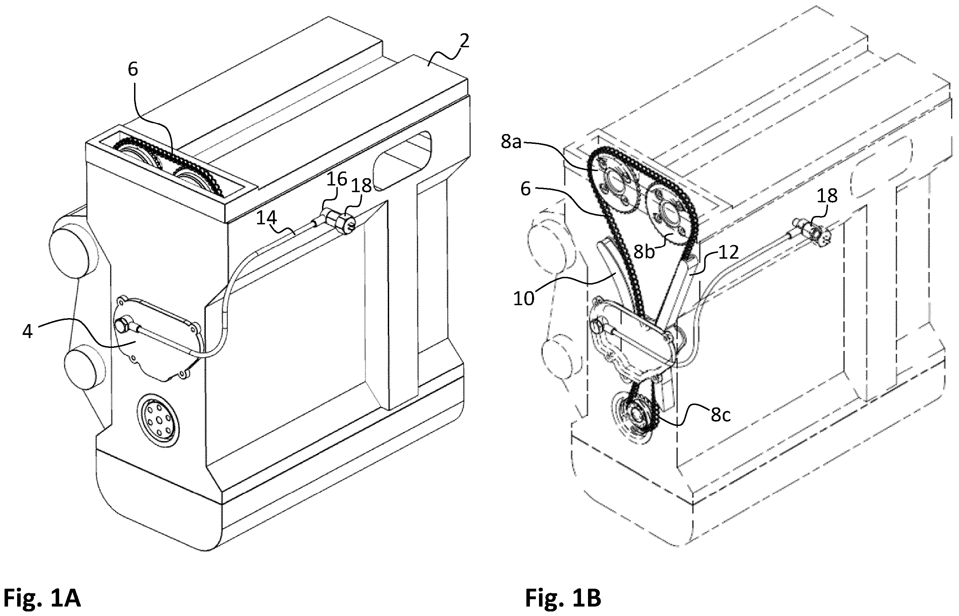

Figures 1A schematically shows an engine block 2 that comprises a timing chain cover 4 according to an embodiment. The engine block 2 may be the result of performing the method for replacing a timing belt with a timing chain disclosed herein. Figure 1B shows the same engine block 2 as figure 1A only the engine is drawn transparent to better show some of the elements involved.

Engine block 2 indeed comprises a timing chain 6 that is mounted around a plurality of timing chain sprockets 8a, 8b, 8c. Herein timing chain sprockets 8a, and 8b are mechanically connected to respective camshafts (not shown), and timing chain sprockets 8c is mechanically connected to a crankshaft (not shown). Visible in figure 1B are also a chain tensioner guide 10, a further chain guide 12 both of which are mounted on a support element (not clearly visible in figure 1B), timing chain cover 4, as well as a fluid connection 14 between an oil outlet 16 of the engine block and timing chain cover 4. This fluid connection between the timing chain cover 4, in particular its oil inlet (not clearly visible in figure 1B), and the oil outlet 16 allows pressurized oil to reach a hydraulic tensioning device (not visible in figure 1B) for actuating the hydraulic tensioning device. The fluid connection 14 may be formed by suitable tubes and/or pipes that are suitable for providing pressurized oil from the oil outlet 16 to the oil inlet of the timing chain cover 4. An oil pressure sensor 18 is also fluidly connected to oil outlet 16.

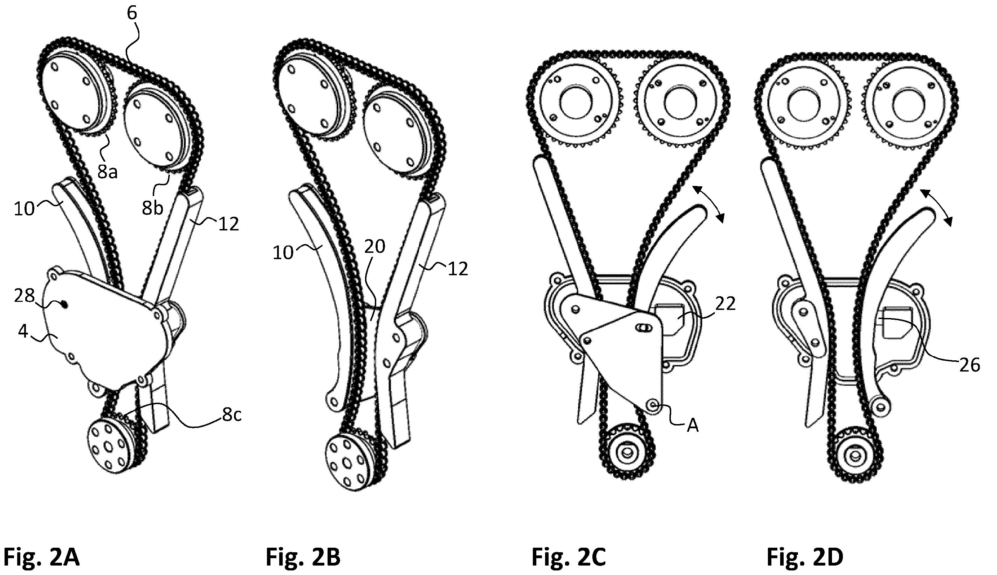

Figure 2A shows the same as figures 1A and 1B only with the engine block 2 omitted for clarity reasons. Figure 2B shows the same as figure 2A with the timing chain cover 4 omitted. Figure 2C is a back view of the configuration as depicted in figure 2A and figure 2D shows the same as figure 2C with the support element 20 omitted for clarity. In a preferred embodiment, the chain tensioner guide 10 and the further chain guide 12 are mounted on support element 20, and the support element 20 itself is mounted in the engine block. The timing chain cover 4 is preferably provided with hydraulic tensioning device 22. The hydraulic tensioning device 22 is for example provided on an inner surface 24 of the timing chain cover 4. Preferably, the chain tensioner guide 10 is pivotably mounted on support element 20. In the depicted embodiment, figure 2C, the chain tensioner guide 10 can pivot around an axis through point A perpendicular to the plane of the paper. The possible pivoting direction is indicated by the double arrows.

As can be seen in figure 2D, the hydraulic tensioning device 22 can push, upon being actuated by pressurized oil, against the chain tensioner guide 10, which, in turn pushes against the timing chain 6 for tensioning the timing chain 6. Thy hydraulic tensioning device 22 for example comprises a piston 26 that can extend from a housing to push against the chain tensioner guide 10.

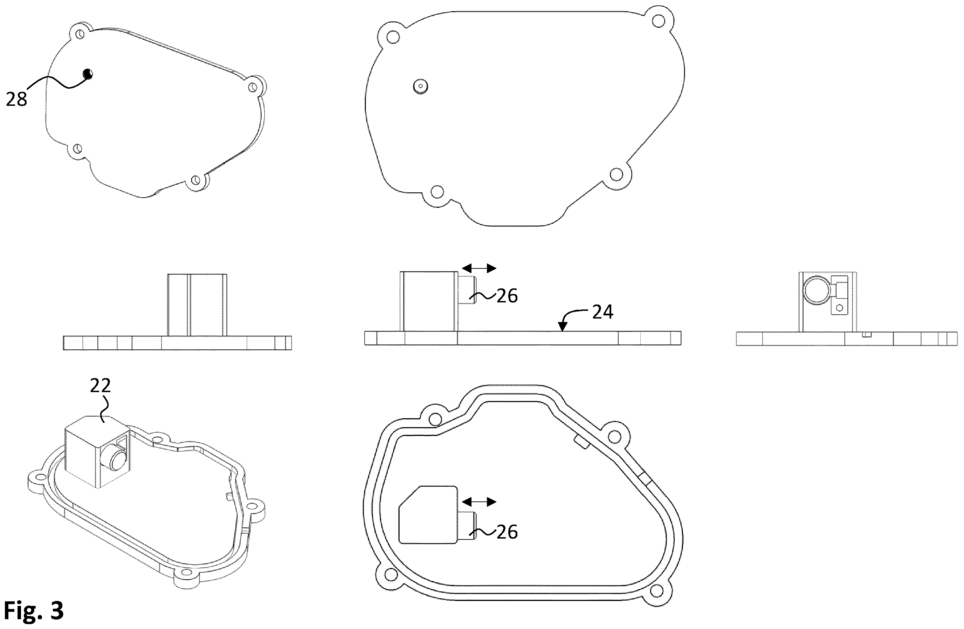

Figure 3 shows different views of the timing chain cover 4 shown in the previous figures. Figure 3 shows a front view (top), top view (middle), left side view (left), right side view (right), back view (bottom), and two perspective views (top left and bottom left). In this embodiment, the hydraulic tensioning device 22 and the timing chain cover 4 are embodied as a unit in the sense that a housing 26 of the hydraulic tensioning device 22 and the timing chain cover 4 are monolithic with each other.

Figure 3 clearly shows the oil inlet 28 of timing chain cover 4. In the depicted embodiment, the oil inlet 28 provides direct access to a chamber of the hydraulic tensioning device 22. In an embodiment, the oil inlet 28 comprises a threaded surface. This is beneficial because then a hollow bolt, such as banjo bolt, can be screwed into the oil inlet for establishing a fluid connection between the oil inlet and a source of pressurized oil. The oil inlet 28 provides a fluid path between one side of the timing chain cover to another side of the timing chain cover.

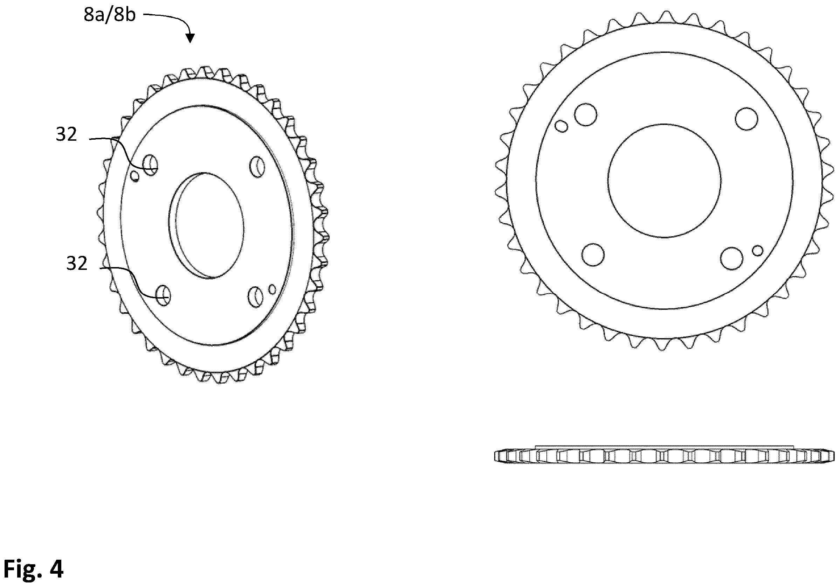

Figure 4 shows a perspective view (left), front view (top right), and side view (bottom right) of a timing chain sprocket according to an embodiment, in particular of a timing chain sprocket that may be attached to a camshaft. The clearance holes 32 allow the timing chain sprockets to be mounted on a hub, in particular a camshaft hub known in the art. Such hub may then be attached to a camshaft, typically by means of a bolt engaging an inner threaded surface within the camshaft such that the bolt presses the hub against the camshaft. Preferably, the original hub is used for attaching the timing chain sprocket to the camshaft, which original hub also mechanically connected a timing belt pulley the camshaft when the engine block still contained the timing belt.

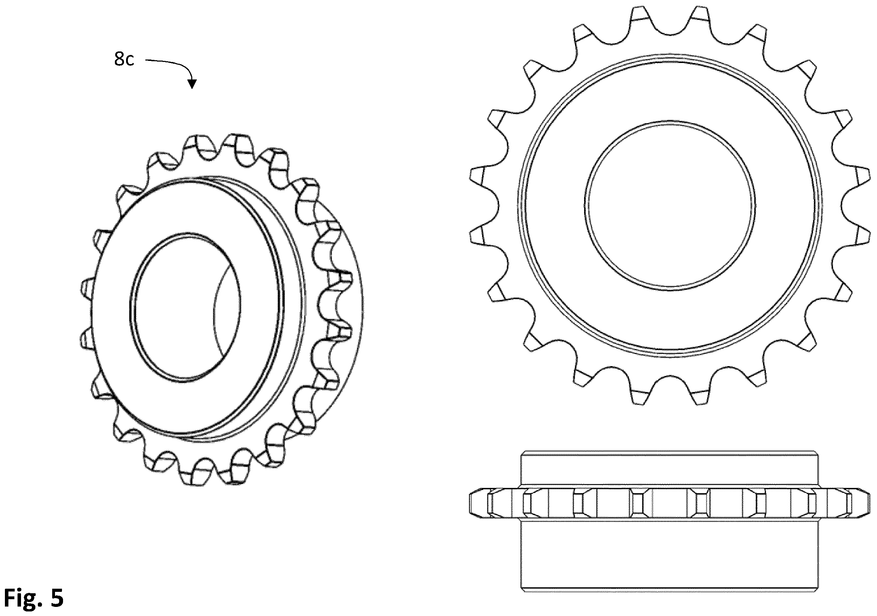

Figure 5 shows a perspective view (left), front view (top right), and side view (bottom right) of a timing chain sprocket according to an embodiment, in particular of a timing chain sprocket 8cthat may be attached to a crankshaft. The timing chain sprocket 8c may be fixed to the crankshaft by means of a crank hub known in the art. Such hub may then be attached to a crankshaft, typically by means of a bolt engaging a threaded surface withing the crankshaft such that the bolt presses the hub against the crankshaft.

Preferably, the hubs that are used to attach timing chain sprockets to a shaft are original in that they were already present in the engine block when the engine block still contained the timing belt. This constitutes an efficient material usages and reduces costs.

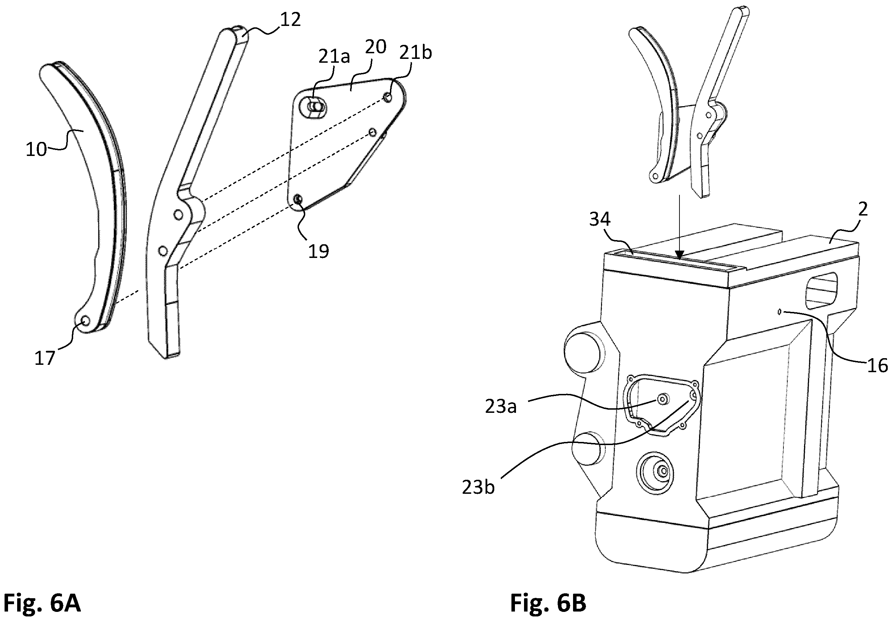

Figure 6A illustrates how, according to an embodiment, the chain tensioner guide 10 and the further chain guide 12 are mounted on support element 20. The further chain guide may simply be bolted on the support element 20 as shown. Preferably, a dowel pin (not shown) is present at position 19 and the chain tensioner guide may be mounted on support element 20 by placing the chain tensioner guide 10 on the support element 20 such that the dowel pin extends through hole 17 of the chain tensioner guide 10. This chain tensioner guide 10 can then freely pivot around the dowel pin. The dowel pin itself would typically be bolted to the support element 20.

Figure 6B shows how the configuration of guides 10, 11 and support element 20 would typically be inserted into the engine block 2, namely via an opening 34 at the top side of the engine block 2. The bolts that are used to mount the guides onto the support element 20 may extend through the support element and may be bolted into threaded holes in the engine block, for example threaded holes to which previously roller guides were bolted when the engine block still contained the timing belt. Such roller guides function to guide the timing belt. To this end, preferably the support element 20 comprises one or more clearance holes that align with one or more respective threaded holes in the engine block 2. In the depicted embodiment, clearance hole 21a aligns with threaded hole 23a and clearance hole 21b aligns with threaded hole 23b (just visible).

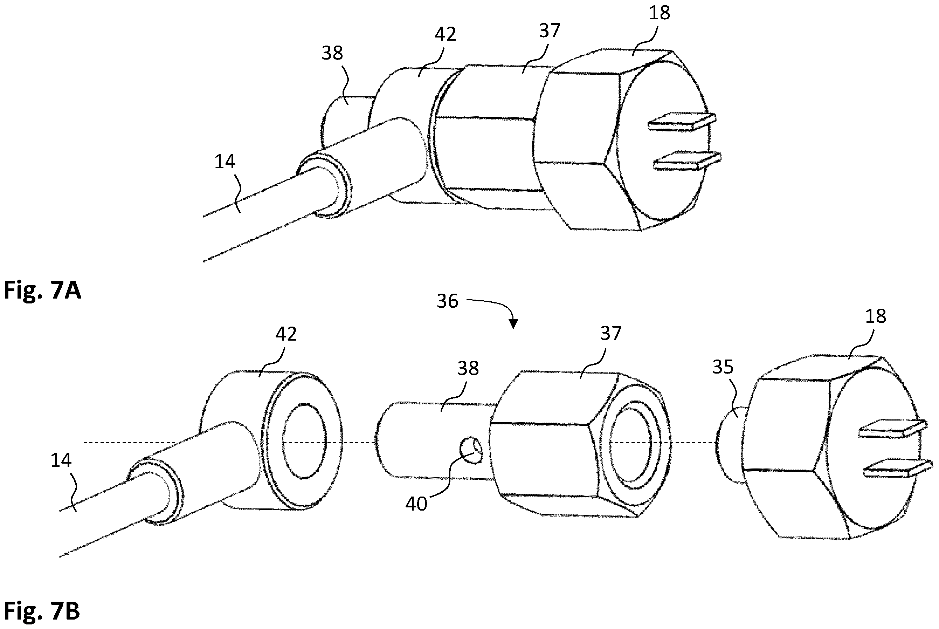

Figure 7A schematically shows a manifold system that, according to an embodiment, may be used to fluidly connect both a device, such as oil sensor 18, and the oil inlet of the timing chain cover to an oil outlet of an engine block. Figure 7B is an exploded view of the manifold system as shown in figure 7A.

The manifold system comprises a banjo fitting 42 that is connected to a tube 14. Tube 14 opens into the interior of the banjo fitting 42. The manifold system also comprises an adapter element 36 that comprises an externally threaded part 38 and an internally threaded part 37. Further, in this case, the oil sensor 18 comprises an externally threaded part 35.

The externally threaded part 35 is mated to the internally threaded part 37 of adapter element 37 so that the oil sensor can be screwed into the adapter element 36. Further, the externally threaded part 38 is mated with the banjo fitting 42 so that part 38 can be screwed through banjo fitting 42. The adapter element 36 is a hollow element. Further, the externally threaded part 38 comprises a through-hole 40 so that when the banjo fitting 42 is threaded onto part 38, a fluid path is established between the interior of the adapter element 36 and the tube 14. As can be seen in figure 7A, the externally threaded part 38 extends through the banjo fitting so that this extended part can be threaded into the oil outlet of the engine block. The oil outlet in this case would be internally threaded so that indeed the externally threaded part 38 can be screwed into the oil outlet.

As is clear from the figures, once the manifold has been mounted on the engine block, not only will there be a fluid connection between oil outlet and tube 14 (which leads to the oil inlet of the timing chain cover), but also between the oil outlet and the oil sensor 18 so that the oil sensor can still measure the oil pressure in the engine block as before.

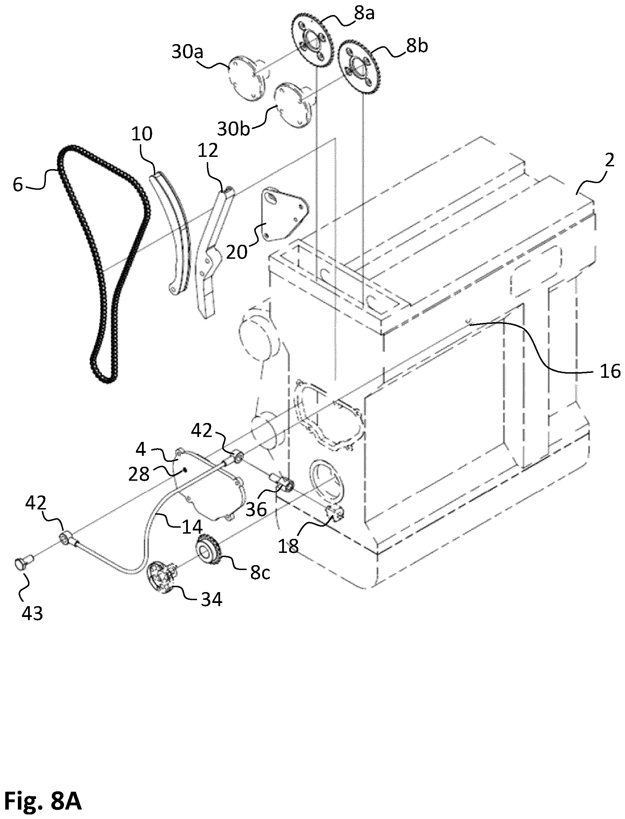

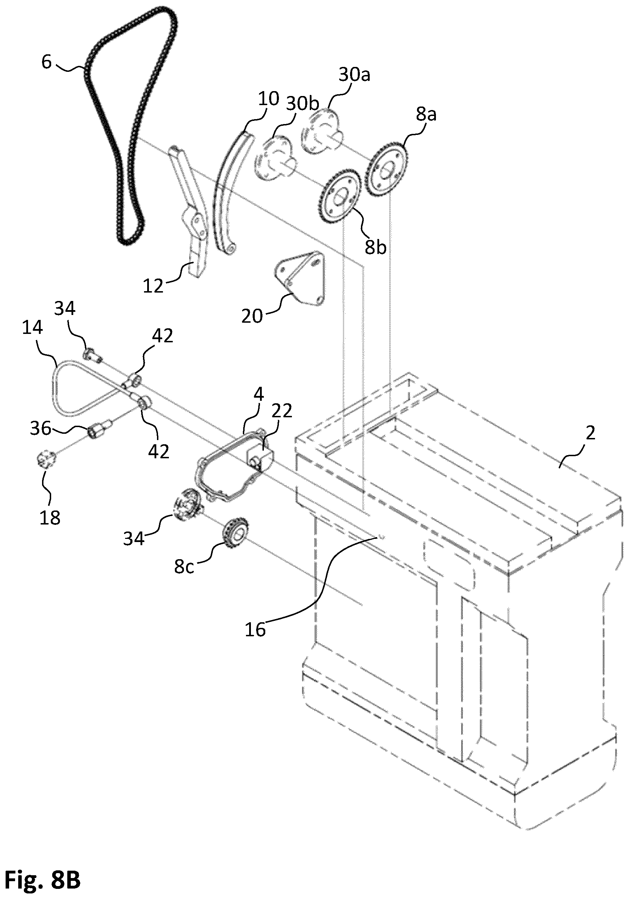

Figures 8A and 8B are exploded views, a front view and a rear view respectively, of the system as shown in figures 1A and 1B. Herein, 30a and 30b are camshaft adjuster hubs, 34 is a crank hub, and 43 is a hollow bolt that cooperates with banjo fitting 42 for allowing oil from oil outlet 16 to reach the oil inlet 28 of timing chain cover 4.

## Claims

1. A method for replacing, in an engine block, a timing belt, preferably a wet timing belt, with a timing chain, the method comprising
removing the timing belt from the engine block, and
replacing a plurality of timing belt pulleys with a plurality of timing chain sprockets, and
mounting the timing chain around the plurality of timing chain sprockets, and
mounting a chain tensioner guide in the engine block, and
mounting a hydraulic tensioning device in the engine block, the mounted hydraulic tensioning device being configured to apply a force on the mounted chain tensioner guide for tensioning the mounted timing chain, and
replacing a timing belt cover with a timing chain cover, wherein
the timing chain cover comprises an oil inlet for allowing oil to pass through the timing chain cover and reach the hydraulic tensioning device for actuating the hydraulic tensioning device, and
fluidly connecting the oil inlet to a source of pressurized oil.

2. The method according to claim 1, wherein
the timing chain cover is provided with the hydraulic tensioning device, and wherein
the step of mounting the hydraulic tensioning device in the engine block is performed by mounting the timing chain cover on the engine block.

3. The method according to any of the preceding claims, wherein fluidly connecting the oil inlet to the source of pressurized oil comprises fluidly connecting the oil inlet to an oil outlet of the engine block.

4. The method according to claim 3, wherein the oil outlet of the engine block is an oil outlet for providing oil to an oil pressure sensor.

5. The method according to claim 4, wherein fluidly connecting the oil inlet of the timing chain cover to the oil outlet of the engine block comprises
- disconnecting the oil pressure sensor from the oil outlet, and
- fluidly connecting a manifold system to the oil outlet, and
- fluidly connecting the oil pressure sensor to a first outlet of the manifold system, and
- fluidly connecting the oil inlet of the timing chain cover to a second outlet of the manifold device.

6. The method according to claim 5, wherein the manifold system comprises a banjo fitting.

7. The method according to any of the preceding claims, wherein
the chain tensioner guide is movably, preferably pivotably, mountable on a support element, preferably a plate-like element, wherein
the step of mounting the chain tensioner guide in the engine block comprises mounting the support element in the engine block.

8. The method according to claim 7, further comprising
mounting a further chain guide in the engine block, wherein
the further chain guide is mountable on the support element, wherein
mounting the further chain guide in the engine block comprises mounting the support element in the engine block.

9. A timing chain cover for covering a timing chain comprising chamber of an engine block, the timing chain cover comprising an oil inlet for allowing oil to pass through the timing chain cover and reach a hydraulic tensioning device in the chamber for actuating the hydraulic tensioning device that is configured to apply a force on a chain tensioner guide for tensioning the timing chain.

10. The timing chain cover according to claim 9, wherein the timing chain cover is provided with the hydraulic tensioning device.

11. A system comprising the chain tensioner guide referred to in claim 1 and the support element referred to in claim 7, wherein the chain tensioner guide is movably, preferably pivotably, mounted on the support element.

12. The system according to claim 11, further comprising the further chain guide referred to in claim 8, wherein the further chain guide is mounted on the support element.

13. A kit of parts comprising
the timing chain cover according to claim 9, and
the hydraulic tensioning device referred to in claim 9.

14. The kit of parts according to claim 13, further comprising
the support element referred to in claim 7, and
the chain tensioner guide referred to in claim 1.

15. The kit of parts according to claim 14, further comprising
the further chain guide referred to in claim 8.
